# EUROPÄISCHE PATENTSCHRIFT

(11) **EP 1 175 819 B1**
(45) Veröffentlichungstag und Bekanntmachung des Hinweises auf die Patenterteilung: **31.12.2008**
(21) Anmeldenummer: 01117068.5
(22) Anmeldetag: 13.07.2001
(51) Int. Cl.: A01B 73/02, A01B 73/04

(54) **Landwirtschaftliche Arbeitsmaschine**
Agricultural working machine
Machine agricole de travail

(30) Priorität: 24.07.2000 DE 10036029
(43) Veröffentlichungstag der Anmeldung: 30.01.2002
(73) Patentinhaber: CLAAS Saulgau GmbH, 88348 Bad Saulgau (DE)
(72) Erfinder: Prenzler, Jürgen, 88377 Unterwaldhausen (DE)

(56) Entgegenhaltungen:
- EP-A- 0 838 146
- EP-A- 0 937 382
- WO-A-92/02690
- DE-C- 19 716 379
- US-A- 4 996 833
- US-A- 5 111 636

## Beschreibung

Die Erfindung betrifft eine landwirtschaftliche Arbeitsmaschine gemäß dem Oberbegriff des Anspruchs 1.

Das Dokument US4996833 offenbart eine landwirtschaftliche Landmaschine, deren Tragrahmen eine erste und eine zweite Schwenkachse aufweist, wobei die zweite Schwenkachse relativ zur ersten Schwenkachse bewegbar ist und während dieser bewegung eine Einheit von Arbeitsorganen Selbsttätig eine Schwenkbewegung um diese zweite Schwenkachse ausführt

Aus der EP 0 672 336 ist eine als Mähwerk ausgeführte landwirtschaftliche Arbeitsmaschine bekannt geworden, deren wenigstens zwei Einheiten von Arbeitsorganen an einem gemeinsamen Hauptrahmen angeordnet sind, wobei der Hauptrahmen einenends am heckseitigen Dreipunktanbau eines als Schlepper ausgeführten Trägerfahrzeugs adaptiert ist. Zum Verbringen des Mähwerks von einer breiten Arbeitsstellung in eine schmale Transportstellung verfügt der Tragrahmen über eine vertikale Schwenkachse, um die das Mähwerk in eine hinter dem Trägerfahrzeug liegende Position nach Art eines Hängers verschwenkt werden kann. Aufgrund dessen, dass die als Mähwerk ausgeführte landwirtschaftliche Arbeitsmaschine über kein eigenes sich auf dem Boden abstützendes Fahrwerk verfügt, sind dem Tragrahmen weitere senkrecht zu der vertikalen Schwenkachse verlaufende Schwenkachsen zugeordnet, mit deren Hilfe die einzelnen Einheiten von Arbeitsorganen gegeneinander verschwenkt werden können. Auf diese Weise soll die Ausladelänge der landwirtschaftlichen Arbeitsmaschine reduziert werden, um die von der Ausladelänge abhängigen, in die Aufsatteleinrichtung des Trägerfahrzeugs eingeleiteten Belastungen möglichst gering zu halten. Aufgrund der Lage der in der Arbeitsstellung in Fahrtrichtung weisenden Schwenkachsen wird jedoch die Länge der landwirtschaftlichen Arbeitsmaschine in der Transportstellung allenfalls auf die Hälfte der Länge der landwirtschaftlichen Arbeitsmaschine in der Arbeitstellung reduziert. Zudem erfolgt die Abstützung der landwirtschaftlichen Arbeitsmaschine aufgrund der seitlichen Anordnung der vertikalen Schwenkachse asymmetrisch an der Aufsatteleinrichtung des Trägerfahrzeugs, sodass die verschleißfördernden Belastungen der Aufsatteleinrichtung aufgrund der asymmetrischen Lasteinleitung und der verbleibenden Ausladelänge der landwirtschaftlichen Arbeitsmaschine nach wie vor hoch sind.

In einer weiteren Ausführungsform soll diesen Nachteilen dadurch abgeholfen werden, dass die zwei an einem gemeinsamen Tragrahmen angeordneten Mäheinheiten von der Arbeits- in die Transportstellung nur um in Fahrtrichtung weisende Achsen verschwenkt werden, sodass in der Transportstellung die innen liegende Mäheinheit in vertikale Richtung weist, während die äußere Mäheinheit um etwa 90° verschwenkt zu dieser inneren Mäheinheit quer zur Fahrtrichtung angeordnet ist. Neben der sich dabei einstellenden großen Transporthöhe birgt eine derartige Transportbreitenreduzierung den Nachteil, dass aufgrund der quer zur Fahrtrichtung angeordneten äußeren Mäheinheit eine Adaptierung einer auf diese Weise zusammenklappbaren landwirtschaftlichen Arbeitsmaschine nur außerhalb des Trägerfahrzeugs in dessen Front- oder Heckbereich erfolgen kann.

Ferner schlägt die EP 0 672 336 zum Antrieb der beiden an einem gemeinsamen Tragrahmen angeordneten Mäheinheiten ein im Bereich der Aufsatteleinrichtung angeordnetes Verteilergetriebe und ein einenends an der inneren Mäheinheit angeordnetes Zwischengetriebe vor, wobei die Antriebsenergie über freiliegende Gelenkwellen zwischen den Getrieben und den Mäheinheiten übertragen wird. Derart freiliegende Gelenkwellen eignen sich nur bedingt für den Einsatz in Mähwerken, da die mit hoher Geschwindigkeit umlaufenden Mähorgane unter Umständen zu einer Aufwirbelung von gemähtem Erntegut und von Verunreinigungen wie Bodenpartikeln führen, sodass die freiliegenden Gelenkwellen einer den Verschleiß fördernden starken Verschmutzung unterliegen.

Der Erfindung liegt deshalb die Aufgabe zugrunde, eine landwirtschaftliche Erntemaschine der beschriebenen Art so zu gestalten, dass die an einem Tragrahmen angeordneten Einheiten von Arbeitsorganen auf konstruktiv einfache Weise von einer breiten Arbeitsstellung in eine kompakte Transportstellung und umgekehrt verbracht werden können, wobei eine einfache Gestaltung des Antriebs der Einheiten von Arbeitsorganen einen niedrigen Verschleiß und eine hohe Funktionssicherheit der landwirtschaftlichen Arbeitsmaschine garantiert.

Erfindungsgemäß wird die Aufgabe durch eine landwirtschaftliche Arbeitsmaschine mit den kennzeichnenden Merkmalen des Anspruchs 1 gelöst.

Indem der die Einheiten von Arbeitsorganen aufnehmende Tragrahmen wenigstens zwei Schwenkachsen aufweist, wobei eine der Schwenkachsen relativ zur anderen Schwenkachse bewegbar ist und während dieser Bewegung wenigstens eine Einheit von Arbeitsorganen selbsttätig eine Schwenkbewegung um diese Achse ausführt, wird erreicht, dass die landwirtschaftliche Erntemaschine auf konstruktiv einfache Weise von einer breiten Arbeitsstellung in eine kompakte Nichtarbeitsstellung und umgekehrt bewegbar ist.

Eine besonders einfache Ausführung einer solchen landwirtschaftlichen Arbeitsmaschine wird dann erreicht, wenn die wenigstens zwei Schwenkachsen in der Arbeitsstellung in Fahrtrichtung weisen, sodass die wenigstens zwei Einheiten von Arbeitsorganen bauraumsparend nur in einer Ebene quer zur Fahrtrichtung bewegt werden.

Es ist auch vorgesehen, dass sich der Tragrahmen der landwirtschaftlichen Erntemaschine und die wenigstens eine verschwenkbare Einheit von Arbeitsorganen während des Verschwenkvorganges in entgegengesetzter Richtung bewegen, sodass sich die an dem Tragrahmen angeordneten Einheiten von Arbeitsorganen beim Verschwenken nach Art eines auf- oder einklappenden Taschenmessers aufeinanderzu- oder voneinanderwegbewegen. Dies führt zu einer erheblichen Reduzierung des erforderlichen Schwenkbereiches der die Arbeitsorgane aufnehmenden Einheiten.

Um einerseits einen konstruktiv einfach gestalteten Antrieb der verschwenkbaren Einheiten von Arbeitsorganen zu erhalten und um andererseits die Arbeitsorgane während des Betriebes ohne Schwierigkeiten beobachten zu können, sind die die Arbeitsorgane tragenden Einheiten entweder in Fahrtrichtung zueinander gestaffel oder in einer sich quer zur Fahrtrichtung erstreckenden Linie nebeneinanderliegend am Tragrahmen angeordnet.

Um ferner eine einfache Gestaltung des Antriebs der Einheiten von Arbeitsorganen zu erhalten, kann dem Tragrahmen ein Verteilergetriebe zugeordnet sein, welches über separate Abtriebe verfügt, sodass die Einheiten von Arbeitsorganen unabhängig voneinander angetrieben werden können, wobei das Verteilergetriebe vorteilhafterweise im Bereich zwischen den Einheiten von Arbeitsorganen angeordnet ist. Um die zwischen dem Trägerfahrzeug und diesem Verteilergetriebe notwendigen Energieübertragungsglieder vor schädlichen Umwelteinflüssen und vor Verschmutzungen zu schützen, können diese Übertragungsglieder in vorteilhafter Weiterbildung der Erfindung im Inneren des Tragrahmens verlaufen.

Eine besonders bauraumsparende Ausführung der erfindungsgemäßen landwirtschaftlichen Arbeitsmaschine wird dann erreicht, wenn die zweite Schwenkachse unmittelbar von dem Verteilergetriebe gebildet wird, wobei für jede Einheit von Arbeitsorganen ein separater Abtrieb vorgesehen ist.

Die bauraumsparendste und die Antriebsorgane am besten abschirmende Ausführung der erfindungsgemäßen landwirtschaftlichen Arbeitsmaschine wird dann erreicht, wenn die Einheiten der Arbeitsorgane in Fahrtrichtung zueinander gestaffelt am Tragrahmen angeordnet sind und das Verteilergetriebe im Bereich zwischen diesen Einheiten eingefügt ist, wobei dessen Abtriebe für die die Arbeitsorgane tragenden Einheiten in entgegengesetzter Richtung aus dem Verteilergetriebe austreten.

Damit jede Einheit von Arbeitsorganen unabhängig von den weiteren am Tragrahmen angeordneten Einheiten von Arbeitsorganen einen sicheren Querausgleich von Bodenunebenheiten realisiert, kann jede Einheit von Arbeitsorganen um eine in Fahrtrichtung weisende Achse pendelnd am Tragrahmen der landwirtschaftlichen Arbeitsmaschine adaptiert sein.

Damit das Verschwenken der Einheiten von Arbeitsorganen um die in Fahrtrichtung weisenden Achsen des Tragrahmens nicht unkontrolliert erfolgt, können diesen Einheiten von Arbeitsorganen Stellmittel zugeordnet sein, die selbstätig oder fremdgesteuert diese Schwenkbewegung unterstützen. Je nach Art der Unterstützung können diese Stellmittel als aktiv angetriebene Hubzylinder oder passiv wirkende Dämpfungsglieder wie Stoßdämpfer oder Federn ausgeführt sein.

Um die Lage der landwirtschaftlichen Arbeitsmaschine in der wenigstens einen Nichtarbeitsstellung zu sichern, kann wenigstens einer der die Arbeitsorgane tragenden Einheiten eine an sich bekannte Verriegelungseinrichtung zugeordnet sein, wobei diese eine Verriegelungseinrichtung im einfachsten Fall direkt von einem der Stellmittel gebildet wird.

Aufgrund dessen, dass die Einheiten von Arbeitsorganen und der diese Einheiten aufnehmende Tragrahmen um in Fahrtrichtung weisende Achsen verschwenken, kann die erfindungsgemäße landwirtschaftliche Arbeitsmaschine an beliebiger Stelle dem Trägerfahrzeug zugeordnet werden.

In vorteilhafter Weiterbildung der Erfindung können einem Trägerfahrzeug auch mehrere erfindungsgemäße landwirtschaftliche Arbeitsmaschinen zugeordnet sein, die entweder direkt oder über einen Zwischenrahmen an das Trägerfahrzeug adaptierbar sind.

Weitere vorteilhafte Ausgestaltungen sind Gegenstand weiterer Unteransprüche und werden nachfolgen an Hand von Zeichnungen näher erläutert.

Es zeigen
- Figur 1: eine Draufsicht der erfindungsgemäßen landwirtschaftlichen Arbeitsmaschine in einer ersten Ausführungsform
- Figur 2: eine Schnittdarstellung gemäß Schnittlinie A-A in Figur 1
- Figur 3: eine Rückansicht der erfindungsgemäßen landwirtschaftlichen Arbeitsmaschine nach Figur 1
- Figur 4: eine Draufsicht der erfindungsgemäßen landwirtschaftlichen Arbeitsmaschine in einer zweiten Ausführungsform

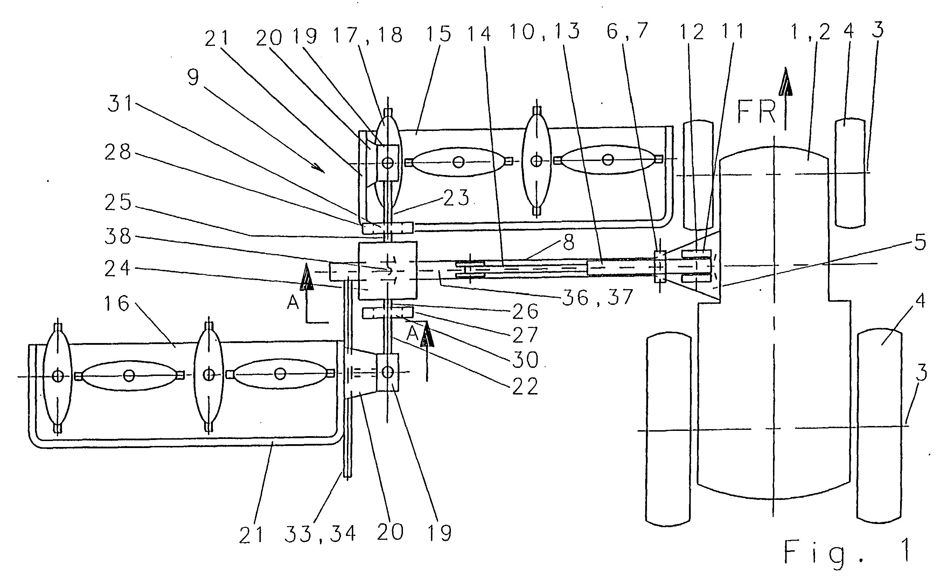

Figur 1 zeigt schematisch ein als Schlepper 2 ausgeführtes Trägerfahrzeug 1 dem zwischen den Achsen 3 der Laufräder 4 einseitig eine Adaptiereinrichtung 5 die auf ihrer dem Trägerfahrzeug 1 abgewandten Seite von einer im einfachsten Fall als axial gesicherter Absteckbolzen 6 ausgeführten in Fahrtrichtung FR weisenden Schwenkachse 7 durchsetzt wird. Der Tragrahmen 8 der noch näher zu beschreibenden erfindungsgemäßen landwirtschaftlichen Arbeitsmaschine 9 steht trägerfahrzeugseitig ebenfalls mit der in Fahrtrichtung FR weisenden Schwenkachse 7 in Wirkverbindung. Zwischen der Adaptiereinrichtung 5 und dem Tragrahmen 8 ist wenigstens ein von Halteflanschen 11 um in Fahrtrichtung FR weisende Achsen 12 schwenkbares Stellmittel 10 zwischengeschaltet, welches ein Verschwenken des Tragrahmens 8 um Schwenkachse 7 ermöglicht. Im einfachsten Fall ist das Stellmittel 10 als einfach- oder doppeltwirkender Hubzylinder 13 ausgeführt, wobei die bei Druckbeaufschlagung oder Entlastung aus dem Hubzylinder 13 herausbewegte oder in diesen hineingeschobene Kolbenstange 14 das Verschwenken des Tragrahmens 8 um die Schwenkachse 7 hervorruft.

Im beschriebenen Ausführungsbeispiel sind dem Tragrahmen 8 zwei in Fahrtrichtung FR zueinander gestaffelte Einheiten 15, 16 von Arbeitsorganen 17 zugeordnet, wobei die Arbeitsorgane 17 als an sich bekannte Mähscheiben 18 ausgeführt sind und die eine Einheit 15 von Arbeitsorganen 17 in Fahrtrichtung FR vor dem Tragrahmen 8 und die andere Einheit 16 von Arbeitsorganen 17 in Fahrtrichtung FR hinter dem Tragrahmen 8 der landwirtschaftlichen Arbeitsmaschine 9 positioniert ist. Es liegt im Rahmen der Erfindung, dass die wenigstens zwei Einheiten 15, 16 von Arbeitsorganen 17 auch quer zur Fahrtrichtung FR nebeneinander am Tragrahmen 8 angeordnet sein können.

In den einander zugwandten Bereichen der die Arbeitsorgane 17 tragenden Einheiten 15, 16 sind den jeweils äußeren Arbeitsorganen 17 in an sich bekannter Weise Antriebe 19 zugeordnet die die Antriebsenergie auf die Arbeitsorgane 17 übertragen. Über Flansche 20 stützen sich die Antriebe 19 an den Stabilisierungsrahmen 21 der die Arbeitsorgane 17 tragenden Einheiten 15, 16 ab. Jeder der Antriebe 19 verfügt über einen Abtrieb 22, 23, wobei die Abtriebe 22, 23 im einfachsten Fall in einer Ebene liegend einander zugewandt sind. Zwischen diesen Abtrieben 22, 23 nimmt der Tragrahmen 8 ein Verteilergetriebe 24 auf, welches über einen in Fahrtrichtung FR und einen entgegen der Fahrtrichtung FR weisenden Abtrieb 25, 26 verfügt. In einem ersten Ausführungsbeispiel sind den Abtrieben 25, 26 Riemenscheiben 27, 28 zugeordnet die über einen Antriebsriemen 29 mit auf den Abtrieben 22, 23 der Antriebe 19 angeordneten Riemenscheiben 30, 31 in Wirkverbindung stehen, wobei jedem Antriebsriemen 29 eine an sich bekannte selbsttätig arbeitende Spanneinrichtung 32 zugeordnet ist. Erfindungsgemäß ist dem Tragrahmen 8 eine zweite in Fahrtrichtung weisende Schwenkachse 33 in Form eines mit dem Tragrahmen 8 fest verbundenen Rohrprofils 34 zugeordnet, wobei das Rohrprofil 34 an seinem freien Ende im einfachsten Fall direkt den Stabilisierungsrahmen 21 der einen Einheit 16 von Arbeitsorganen 17 schwenkbar aufnimmt, sodass diese in Fahrtrichtung FR hinten liegende Einheit 16 von Arbeitsorganen 17 um die zweite Schwenkachse 33 drehbar am Tragrahmen 8 der landwirtschaftlichen Erntemaschine 9 angeordnet ist. Damit wird erfindungsgemäß eine landwirtschaftliche Arbeitsmaschine 9 geschaffen, deren Tragrahmen 8 wenigstens eine erste Schwenkachse 7 und eine zweite Schwenkachse 33 aufweist, wobei die am Tragrahmen 8 fixierte zweite Schwenkachse 33 durch Betätigung der Stellmittel 10 relativ zur ersten Schwenkachse 7 bewegbar ist und während dieser Bewegung die im Ausführungsbeisplel rückwärtige Einheit 16 von Arbeitsorganen 17 selbsttätig eine Schwenkbewegung um die zweite Schwenkachse 33 ausführt. Damit wird es möglich eine wenigstens zwei Einheiten 15, 16 von Arbeitsorganen 17 aufnehmende landwirtschaftliche Arbeitsmaschine 9 von einer breiten Arbeitsstellung in wenigstens eine kompakte Nichtarbeitsstellung zu verschwenken, ohne das für den Verschwenkvorgang ein großer Schwenkraum benötigt wird. Unterstütz wird diese Schwenkraumreduzierung vorallem auch dadurch, dass die erste Schwenkachse 7 als auch die zweite Schwenkachse 33 des Tragrahmens 8 in Fahrtrichtung FR weisend am Tragrahmen 8 angeordnet sind.

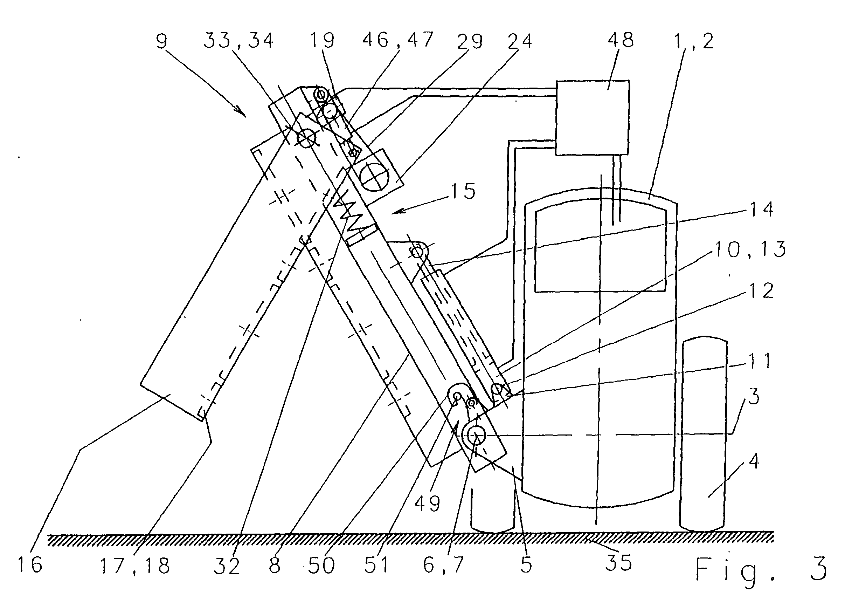

In der Arbeitsstellung gemäß Figur 1 befindet sich die Kolbenstange 14 in einer aus dem Hubzylinder 13 herausgeschobenen Lage, sodass die Einheiten 15, 16 von Arbeitsorganen 17 in einer bodennahen Position verharren. Wird der Hubzylinder 13 druckbeaufschlagt bewegt sich die Kolbenstange 14 in den Hubzylinder 13 hinein, wobei der Tragrahmen 8 eine Schwenkbewegung um seine erste Schwenkachse 7 in vertikaler Richtung ausführt. Dabei wird die fest mit dem Tragrahmen 8 verbundene Schwenkachse 33 ebenfalls um Schwenkachse 7 in vertikaler Richtung bewegt, sodass sich ihr Abstand vom Boden 35 erhöht. Diese Höhenbewegung wird auch der mit der zweiten Schwenkachse 33 drehbar verbundenen rückwärtige Einheit 16 von Arbeitsorganen 17 im Bereich der Schwenkachse 33 aufgezwungen. Dabei hebt die rückwärtige Einheit 16 von Arbeitsorganen 17 allmählich vom Boden 35 ab und wird schwerkraftbedingt entgegen dem Uhrzeigersinn um die zweite Schwenkachse 33 bewegt. Indem der Tragrahmen 8 beim Verschwenken in die Nichtarbeitsstellung um die erste Schwenkachse 7 im Uhrzeigersinn und die rückwärtige Einheit 16 entgegen dem Uhrzeigersinn bewegt werden, wird die landwirtschaftliche Arbeitsmaschine gemäß Figur 3 nach Art eines Taschenmessers zusammengeklappt während sie sich beim Rückschwenken in die Arbeitsstellung in analoger Weise nach Art eines Taschenmessers auseinanderfaltet.

Um den Abstand zwischen dem Verteilergetriebe 24 und den Antrieben 19 möglichst kurz zu halten, ist das Verteilergetriebe 24 im Bereich der Antriebe 19 am freien Ende des Tragrahmens 8 angeordnet. Damit die zur Energieübertragung zwischen dem Trägerfahrzeug 1 und dem Verteilergetriebe 24 notwendigen Energieübertragungsglieder 36 gegen Umwelteinflüsse und Verschmutzungen abgeschirmt sind, verlaufen die einfachstenfalls als Gelenkwellen 37 ausgeführten Energieübertragungsglieder 36 innerhalb des Tragrahmens 8, wobei das Verteilergetriebe 24 untenseitig über eine aus dem Verteilergetriebe 24 herausgeführte Antriebswelle 38 verfügt, die mit der im Rahmen 8 verlaufenden Gelenkwelle 37 in Wirkverbindung steht.

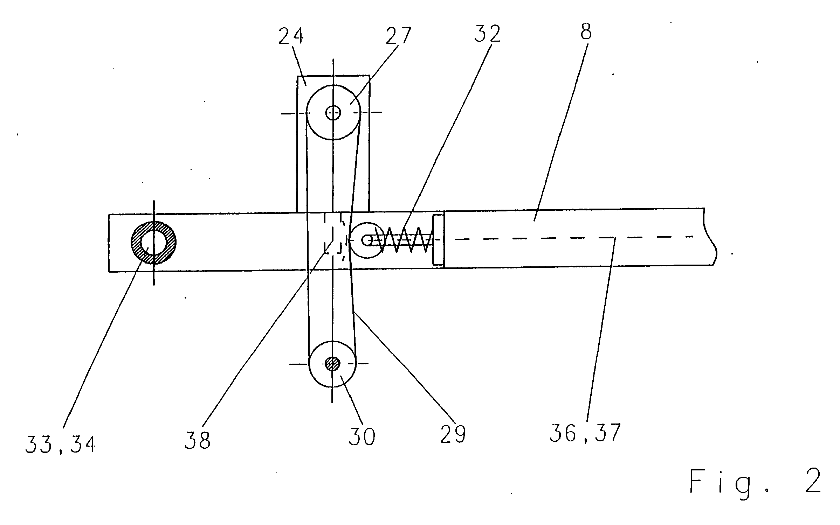

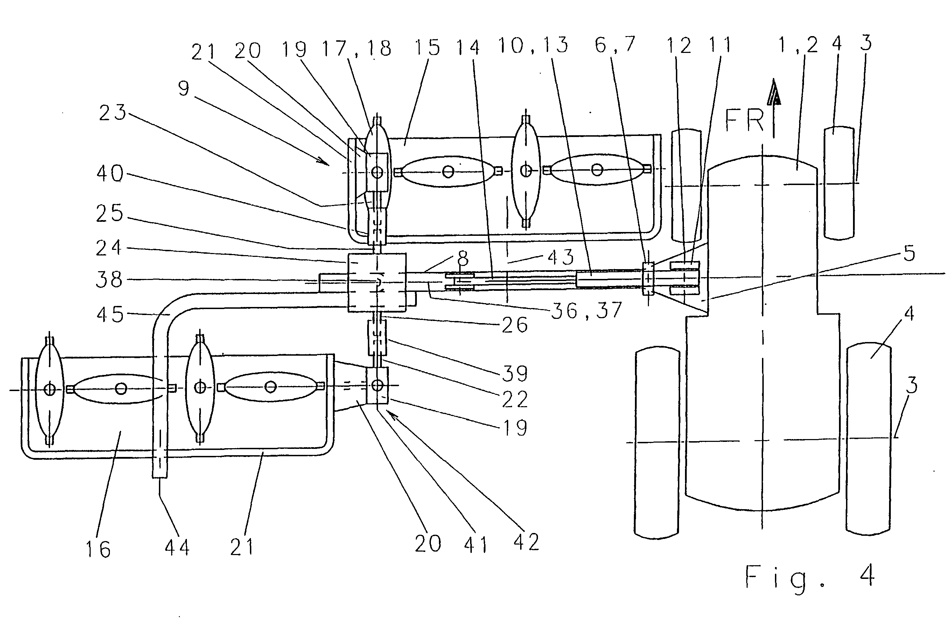

In einem weiteren Ausführungsbeispiel gemäß Figur 4 liegen die Abtriebe 25, 26 in der gleichen Ebene wie die Abtriebe 22, 23 der Antriebe 19, sodass die Abtriebe 25, 26 des Verteilergetriebes 24 direkt mit den Abtrieben 25, 26 der Antriebe 19 energieübertragend verbunden sein können. Auf konstruktiv einfach Weise kann diese energieübertragende Verbindung dadurch erreicht werden, dass Buchsen 39, 40 die Abtriebe 22, 23, 25, 26 drehfest miteinander verbinden. Bei einer derartigen Ausführung liegen die zueinander fluchtenden Abtriebe 22, 26 auf einer gemeinsamen achsialen Linie 41. In diesem Fall kann auf die erfindungsgemäße zweite Schwenkachse 33 nach den Figuren 1 bis 3 verzichtet werden, da die über Buchse 39 miteinander drehfest verbundenen Abtriebe 22, 26 die erfindungsgemäße zweite Schwenkachse 42 bilden, um die die rückwärtige Einheit 16 von Arbeitsorganen 17 beim Verschwenken des Tragrahmens 8 um Schwenkachse 7 selbsttätig eine Schwenkbewegung ausführt.

Damit die die Arbeitsorgane 17 tragenden Einheiten 15, 16 unabhängig voneinander eine die Bodenanpassung der Einheiten 15, 16 verbessernde Querpendelung zulassen, können die Einheiten 15, 16 über in Fahrtrichtung FR weisende Pendelachsen 43, 44 am Tragrahmen 8 drehbeweglich angeordnet sein. Auf konstruktiv einfache Weise ist die in Fahrtrichtung FR vorn liegende Einheit 15 über ihren Stabilisierungsrahmen 21 direkt mit der am Tragrahmen 8 drehfest angeordnet Pendelachse 43 verbunden während die den Stabilisierungsrahmen 21 der rückwärtigen Einheit 16 durchsetzende Pendelachse 44 über einen Zwischenrahmen 45 am Tragrahmen 8 gelenkig gehaltert ist.

Um ein Scharren der verschwenkbaren Einheit 16 beim Verschwenken um die zweite Schwenkachse 33, 42 auf dem Boden 35 und ein unkontrolliertes schwerkraftabhängiges Pendeln um diese Schwenkachse 33, 42 zu vermeiden, können dieser rückwärtigen Einheit 16 Stellmittel 46 zugeordnet sein, die anderenends gemäß Figur 3 mit dem Tragrahmen 8 in Wirkverbindung stehen. Ist das wenigstens eine Stellmittel 46 als Hubzylinder 47 ausgeführt kann dieser über eine an sich bekannte hydraulische Steuereinheit 48 mit dem wenigstens einen Hubzylinder 13 des Tragrahmens 8 verbunden sein, sodass der Schwenkvorgang der rückwärtigen Einheit 16 in Abhängigkeit von der Schwenkbewegung des Tragrahmens 8 gesteuert werden kann. Damit wird sichergestellt, das die wenigstens eine verschwenkbare Einheit 16 stets nur soweit ein- oder ausschwenkt, dass sie während des Verschwenkvorganges keinen Kontakt zum Boden 35 hat, wodurch Beschädigungen an der Einheit 16 und der Grasnarbe durch Schleifen auf dem Boden 35 vermieden werden. In kostengünstiger Weise können die Stellmittel 46 auch als passiv arbeitende Stossdämpfer oder Federn ausgeführt sein, wobei hier die jeweilige Feder- oder Dämpfungskonstante so auf die Gewichtskraft der die Arbeitsorgane 17 aufnehmenden Einheit 16 abgestimmt ist, dass beim Verschwenkvorgang der Einheit 16 deren Scharren auf dem Boden 35 vermieden wird.

Zur Gewährleistung einer stabilen Lage der landwirtschaftlichen Arbeitsmaschine 9 in der Nichtarbeitsposition kann der landwirtschaftlichen Arbeitsmaschine 9 eine an sich bekannte Verriegelungseinrichtung 49 zugeordnet sein. Auf konstruktiv einfache Weise kann diese Verriegelungsvorrichtung 49 von einem mit der Adaptiereinrichtung 5 drehbar verbunden hakenförmigen Riegel 50 gebildet werden, der in der Nichtarbeitsstellung an seinem hakenförmigen Ende einen am Tragrahmen 8 fixierten Bolzen 51 umgreift. Die Ver- und Entriegelung des hackenförmigen Riegels 50 kann in an sich bekannter und deshalb nicht näher dargestellter Weise entweder manuell oder fernbetätigt erfolgen. Eine komfortable Weiterbildung der Verriegelungseinrichtung 49 wird dann erreicht, wenn die ohnehin vorhandenen Hubzylinder 13, 47 in der Nichtarbeitsposition druckbeaufschlagt bleiben, sodass die Hubzylinder 13, 47 selbst die Verriegelungseinrichtung 49 bilden. Eine derartige Ausführung kommt ohne den hakenförmigen Riegel 50 und den mit ihm in Wirkverbindung stehenden Bolzen 51 aus.

Es liegt im Rahmen der Erfindung, dass die erfindungsgemäße landwirtschaftliche Arbeitsmaschine 9 an beliebiger Stelle dem Trägerfahrzeug 1 zugeordnet sein kann, wobei das Trägerfahrzeug 1 in seinem Front-, Seiten- und Heckbereich auch mehrere erfindungsgemäße landwirtschaftliche Arbeitsmaschinen 9 aufnehmen kann. In nicht näher dargestellter Weise können auch mehrer erfindungsgemäße landwirtschaftliche Arbeitsmaschinen 9 an einem gemeinsamen Rahmengestell angeordnet sein, sodass nur dieses Rahmengestell am Trägerfahrzeug adaptiert werden muss. Auf diese Weise wird eine deutliche Reduzierung des Montageaufwandes zur Adaptierung mehrerer erfindungsgemäßer landwirtschaftlicher Arbeitsmaschinen 9 am Trägerfahrzeug 1 erreicht.

Die am Beispiel einer als Mähscheiben 18 ausgeführte Arbeitsorgane 17 tragenden landwirtschaftlichen Arbeitsmaschine 9 beschriebene Erfindung ist nicht auf eine solche Ausführung beschränkt, sondern kann auf beliebig ausgeführte Arbeitsorgane tragende landwirtschaftliche Arbeitsmaschinen angewendet werden, um die erfindungsgemäßen Effekte zu erzielen.

### Bezugszeichenliste

- 1: Trägerfahrzeug
- 2: Schlepper
- 3: Achse
- 4: Laufrad
- 5: Adaptiereinrichtung
- 6: Absteckbolzen
- 7: erste Schwenkachse
- 8: Tragrahmen
- 9: landwirtschaftliche Arbeitsmaschine
- 10: Stellmittel
- 11: Halteflansch
- 12: Achse
- 13: Hubzylinder
- 14: Kolbenstange
- 15: Arbeitsorgane tragende Einheit
- 16: Arbeitsorgane tragende Einheit
- 17: Arbeitsorgane
- 18: Mähscheiben
- 19: Antrieb
- 20: Flansch
- 21: Stabilisierungsrahmen
- 22: Abtrieb
- 23: Abtrieb
- 24: Verteilergetriebe
- 25: Abtrieb
- 26: Abtrieb
- 27: Riemenscheibe
- 28: Riemenscheibe
- 29: Antriebsriemen
- 30: Riemenscheibe
- 31: Riemenscheibe
- 32: Spanneinrichtung

- 33: Zweite Schwenkachse
- 34: Rohrprofil
- 35: Boden
- 36: Energieübertragungsglied
- 37: Gelenkwelle
- 38: Antriebswelle
- 39: Buchse
- 40: Buchse
- 41: Achsiale Linie
- 42: Zweite Schwenkachse
- 43: Pendelachse
- 44: Pendelachse
- 45: Zwischenrahmen
- 46: Stellmittel
- 47: Hubzylinder
- 48: Steuereinheit
- 49: Verriegelungseinrichtung
- 50: Hakenförmiger Riegel
- 51: Bolzen

- FR: Fahrtrichtung

## Patentansprüche

1. Landwirtschaftliche Arbeitsmaschine mit wenigstens einem an einem Trägerfahrzeug adaptierten und in eine oder mehrere Arbeits- und Nichtarbeitsstellungen verschwenkbaren wenigstens zwei Einheiten von Arbeitsorganen aufnehmenden Tragrahmen (8), der wenigstens eine erste Schwenkachse (7) und eine zweite Schwenkachse (33, 42) aufweist, wobei die zweite Schwenkachse (33, 42) relativ zur ersten Schwenkachse (7) bewegbar ist und während dieser Bewegung wenigstens eine Einheit (15, 16) von Arbeitsorganen (17) selbsttätig eine Schwenkbewegung um diese zweite Schwenkachse (33, 42) ausführt, **dadurch gekennzeichnet, dass** sich der Tragrahmen der landwirtschaftlichen Erntemaschine und die wenigstens eine verschwenkbare Einheit von Arbeitsorganen während des Verschwenkvorganges in entgegengesetzter Richtung bewegen und dass sich die an dem Tragrahmen angeordneten Einheiten von Arbeitsorganen beim Verschwenken nach Art eines auf- oder einklappenden Taschenmessers aufeinanderzu- oder voneinanderwegbewegen und dem Tragrahmen (8) im Bereich zwischen den Einheiten (15, 16) von Arbeitsorganen (17) ein Verteilergetriebe (24) mit Energieübertragungsorganen (36) zugeordnet ist und das Verteilergetriebe (24) über separate Abtriebe (25, 26) für jede am Tragrahmen (8) angeordnete Einheit (15, 16) von Arbeitsorganen (17) verfügt.

2. Landwirtschaftliche Arbeitsmaschine nach Anspruch 1, **dadurch gekennzeichnet, dass** die erste Schwenkachse (7) und die zweite Schwenkachse (33, 42) in Fahrtrichtung (FR) weisen.

3. Landwirtschaftliche Arbeitsmaschine nach einem oder mehreren der vorhergehenden Ansprüche, **dadurch gekennzeichnet, dass** die Schwenkbewegungen des Tragrahmens (8) und der wenigstens einen verschwenkbaren Einheit (15,16) von Arbeitsorganen (17) in entgegengesetzter Richtung verlaufen.

4. Landwirtschaftliche Arbeitsmaschine nach einem oder mehreren der vorhergehenden Ansprüche, **dadurch gekennzeichnet, dass** die dem Tragrahmen (8) zugeordneten Einheiten (15, 16) von Arbeitsorganen (17) in Fahrtrichtung (FR) zueinander gestaffelt angeordnet sind.

5. Landwirtschaftliche Arbeitsmaschine nach einem oder mehreren der Ansprüche 1-3, **dadurch gekennzeichnet, dass** die dem Tragrahmen (8) zugeordneten Einheiten (15, 16) von Arbeitsorganen (17) nebeneinander angeordnet sind.

6. Landwirtschaftliche Arbeitsmaschine nach einem oder mehreren der vorhergehenden Ansprüche, **dadurch gekennzeichnet, dass** die Energieübertragungsorgane (36) im Inneren des Tragrahmens (8) verlaufen.

7. Landwirtschaftliche Arbeitsmaschine nach einem oder mehreren der vorhergehenden Ansprüche, **dadurch gekennzeichnet, dass** die zweite Schwenkachse (42) von dem Verteilergetriebe (24) gebildet wird und das Verteilergetriebe (24) für jede Einheit (15, 16) von Arbeitsorganen (17) über einen separaten Abtrieb (25, 26) verfügt.

8. Landwirtschaftliche Arbeitsmaschine nach einem oder mehreren der vorhergehenden Ansprüche, **dadurch gekennzeichnet, dass** dem Tragrahmen (8) zwei in Fahrtrichtung (FR) zueinander gestaffelte Einheiten (15, 16) von Arbeitsorganen (17) zugeordnet sind und das Verteilergetriebe (24) zueinander entgegengesetzt orientierte Abtrieb (25, 26) zur separaten Energieübertragung auf die erste und die zweite Einheit (15, 16) von Arbeitsorganen (17) aufweist.

9. Landwirtschaftliche Arbeitsmaschine nach einem oder mehreren der vorhergehenden Ansprüche, **dadurch gekennzeichnet, dass** jede Einheit (15, 16) von Arbeitsorganen (17) über eine in Fahrtrichtung (FR) weisende Pendelachse (43, 44) mit dem Tragrahmen (8) verbunden ist.

10. Landwirtschaftliche Arbeitsmaschine nach einem oder mehreren der vorhergehenden Ansprüche, **dadurch gekennzeichnet dass** die Schwenkbewegung der wenigsten einen um die zweite Schwenkachse (33, 42) verschwenkbaren Einheit (16) von Arbeitsorganen (17) durch Stellmittel (46) unterstützt wird.

11. Landwirtschaftliche Arbeitsmaschine nach Anspruch 10, **dadurch gekennzeichnet, dass** die Stellmittel (46) an sich bekannte Hubzylinder (47) und/oder Stoßdämpfer und/oder Federn sein können.

12. Landwirtschaftliche Arbeitsmaschine nach einem oder mehreren der vorhergehenden Ansprüche, **dadurch gekennzeichnet, dass** wenigsten eine der Einheiten (15, 16) von Arbeitsorganen (17) über zumindest eine Verriegelungseinrichtung (49) zur Lagefixierung in der wenigstens einen Nichtarbeitsposition verfügt.

13. Landwirtschaftliche Arbeitsmaschine nach Anspruch 12, **dadurch gekennzeichnet,dass** die zumindest eine Verriegelungseinrichtung (49) von wenigstens einem der Stellmittel (10, 46) gebildet wird.

14. Landwirtschaftliche Arbeitsmaschine nach einem oder mehreren der vorhergehenden Ansprüche, **dadurch gekennzeichnet, dass** der die Einheiten (15, 16) von Arbeitsorganen (17) aufnehmende Tragrahmen (8) dem Trägerfahrzeug (1) an beliebiger Stelle zugeordnet ist.

15. Landwirtschaftliche Arbeitsmaschine nach einem oder mehreren der vorhergehenden Ansprüche, **dadurch gekennzeichnet, dass** dem Trägerfahrzeug (1) eine Vielzahl von Tragrahmen (8) mit Einheiten (15, 16) von Arbeitsorganen (17) zugeordnet sind und die Vielzahl von Tragrahmen (8) direkt oder über Zwischenrahmen am Trägerfahrzeug (1) adaptiert sind.

## Claims

1. An agricultural working machine comprising at least one support frame (8) which is adapted to a carrier vehicle and which is pivotable into one or more operative and inoperative positions and which accommodates at least two units of working members and which has at least a first pivot axis (7) and a second pivot axis (33, 42), wherein the second pivot axis (33, 42) is movable relative to the first pivot axis (7) and during said movement at least one unit (15, 16) of working members (17) automatically performs a pivotal movement about said second pivot axis (33, 42), **characterised in that** the support frame of the agricultural harvesting machine and the at least one pivotable unit of working members move during the pivoting operation in opposite directions and that the units of working members, that are arranged on the support frames, move towards and away from each other in the pivotal movement in the manner of a pocket knife which can be pivoted open or closed and a distributor transmission (24) with power transmission members (36) is associated with the support frame (8) in the region between the units (15, 16) of working members (17) and the distributor transmission (24) has separate drive outputs (25, 26) for each unit (15, 16) of working members (17), that is arranged at the support frame (8).

2. An agricultural working machine according to claim 1 **characterised in that** the first pivot axis (7) and the second pivot axis (33, 42) point in the travel direction (FR).

3. An agricultural working machine according to one or more of the preceding claims **characterised in that** the pivotal movements of the support frame (8) and the at least one pivotable unit (15, 16) of working members (17) occur in opposite directions.

4. An agricultural working machine according to one or more of the preceding claims **characterised in that** the units (15, 16) of working members (17), that are associated with the support frame (8), are arranged in mutually staggered relationship in the travel direction (FR).

5. An agricultural working machine according to one or more of claims 1 to 3 **characterised in that** the units (15. 16) of working members (17), that are associated with the support frame (8), are arranged in mutually juxtaposed relationship.

6. An agricultural working machine according to one or more of the preceding claims **characterised in that** the power transmission members (36) extend in the interior of the support frame (8).

7. An agricultural working machine according to one or more of the receding claims **characterised in that** the second pivot axis (42) is formed by the distributor transmission (24) and the distributor transmission (24) has a separate drive output (25, 26) for each unit (15, 16) of working members (17).

8. An agricultural working machine according to one or more of the preceding claims **characterised in that** two units (15, 16) of working members (17), that are mutually staggered in the travel direction (FR), are associated with the support frame (8) and the distributor transmission (24) has mutually oppositely oriented drive outputs (25, 26) for separate power transmission to the first and second units (15, 16) of working members (17).

9. An agricultural working machine according to one or more of the preceding claims **characterised in that** each unit (15, 16) of working members (17) is connected to the support frame (8) by way of a swing axle (43, 44) pointing in the travel direction (FR).

10. An agricultural working machine according to one on more of the preceding claims **characterised in that** the pivotal movement of the at least one unit (16) of working members (17), that is pivotable about the second pivot axis (33. 42), is assisted by control means(46).

11. An agricultural working machine according to claim 10 **characterised in that** the control means (46) can be per se known stroke cylinders (47) and/or shock absorbers and/or springs.

12. An agricultural working machine according to one or more of the preceding claims **characterised in that** at least one of the units (15, 16) of working members (17) has at least one locking device (49) for positional fixing in the at least one inoperative position.

13. An agricultural working machine according to claim 12 **characterised in that** the at least one locking device (49) is formed by at least one of the control means (10, 46).

14. An agricultural working machine according to one or more of the preceding claims **characterised in that** the support frame (8) accommodating the units (15, 16) of working members (17) is associated with the carrier vehicle (1) at any position.

15. An agricultural working machine according to one or more of the preceding claims **characterised in that** a plurality of support frames (8) with units (15, 16) of working members (17) are associated with the carrier vehicle (1) and the plurality of carrier frames (8) are mounted to the carrier vehicle (1) directly or by way of intermediate frames.

## Revendications

1. Machine agricole de travail comprenant au moins un cadre porteur (8) qui est adapté sur un véhicule porteur et qui accueille au moins deux unités d'organes de travail en pouvant basculer dans une ou plusieurs positions actives et inactives, autour d'au moins un premier axe de basculement (7) et d'un second axe de basculement (33, 42) capable de se déplacer par rapport au premier axe (7) avec, pendant ce mouvement, basculement automatique d'au moins une unité (15, 16) d'organes de travail (17) autour de ce second axe (33, 42), cette machine agricole présentant les caractéristiques suivantes :
- le cadre porteur de la machine agricole de récolte et l'unité basculante d'organes de travail, au nombre d'une au moins, se déplacent dans des sens opposés pendant le basculement,
- pendant le basculement, les unités d'organes de travail montées sur le cadre porteur se déplacent en se rapprochant et en s'éloignant l'une de l'autre à la manière d'un couteau de poche qui s'ouvre ou se ferme,
- dans la zone située entre les unités (15, 16) d'organes de travail (17), au cadre porteur (8) est associée une boîte de transfert (24) qui comprend des organes de transmission d'énergie (36) et qui dispose de sorties séparées (25, 26) pour les unités (15, 16) d'organes de travail (17) montées sur le cadre porteur (8).

2. Machine agricole de travail selon la revendication 1, **caractérisée en ce que** le premier axe de basculement (7) et le second axe de basculement (8) sont orientés selon la direction de déplacement (FR) de la machine.

3. Machine agricole de travail selon la revendication 1 ou 2, **caractérisée en ce que** les mouvements de basculement du cadre porteur (8) et d'au moins une unité (15, 16) d'organes de travail (17) ont lieu dans des sens opposés.

4. Machine agricole de travail selon une ou plusieurs des revendications précédentes, **caractérisée en ce que** les unités (15, 16) d'organes de travail (17) associées au cadre porteur sont décalées l'une par rapport à l'autre dans la direction de déplacement (FR).

5. Machine agricole de travail selon une ou plusieurs des revendications 1 à 3, **caractérisée en ce que** les unités (15, 16) d'organes de travail (17) associées au cadre porteur (8) sont disposées l'une à côté de l'autre.

6. Machine agricole de travail selon une ou plusieurs des revendications précédentes, **caractérisée en ce que** les organes de transmission d'énergie (36) se trouvent à l'intérieur du cadre porteur (8).

7. Machine agricole de travail selon une ou plusieurs des revendications précédentes, **caractérisée en ce que** le second axe de basculement (42) est constitué par la boîte de transfert (24) qui dispose pour chaque unité (15, 16) d'organes de travail, d'une sortie séparée (25, 26).

8. Machine agricole de travail selon une ou plusieurs des revendications précédentes, **caractérisée en ce qu'**au corps porteur (8) sont associées deux unités (15, 16) d'organes de travail (17) décalées l'une par rapport à l'autre selon la direction de déplacement (FR) et que la boîte de transfert (24) présente deux sorties (25, 26) orientées à l'opposé, pour transmettre de l'énergie à la première et à la seconde unité (15, 16) d'organes de travail (17).

9. Machine agricole de travail selon une ou plusieurs des revendications précédentes, **caractérisée en ce que** chaque unité (15, 16) d'organes de travail (17) est reliée au cadre porteur (8) par un axe oscillant (43, 44) qui est orienté selon la direction de déplacement (FR).

10. Machine agricole de travail selon une ou plusieurs des revendications précédentes, **caractérisée en ce que** le mouvement de basculement de l'unité (16) d'organes de travail, au nombre d'une au moins, qui peut basculer autour du second axe de basculement (33, 42), est assisté par des moyens de positionnement (46).

11. Machine agricole de travail selon la revendication 10, **caractérisée en ce que** les moyens de positionnement (46) peuvent être des vérins (47) connus en eux-mêmes et/ou des amortisseurs et/ou des ressorts.

12. Machine agricole de travail selon une ou plusieurs des revendications précédentes, **caractérisée en ce qu'**au moins une des unités (15, 16) d'organes de travail (17) dispose d'au moins un dispositif de verrouillage (49) pour assurer sa fixation en position inactive.

13. Machine agricole de travail selon la revendication 12, **caractérisée en ce que** le dispositif de verrouillage (49) au nombre d'un au moins est constitué par au moins un des moyens de positionnement (10, 46).

14. Machine agricole de travail selon une des revendications précédentes, **caractérisée en ce que** le cadre porteur (8) qui accueille les unités (15, 16) d'organes de travail (17) est associé au véhicule porteur (1) en un point quelconque.

15. Machine agricole de travail selon une des revendications précédentes, **caractérisée en ce qu'**au véhicule porteur (1) est associée une pluralité de cadres porteurs (8) accueillant des unités (15, 16) d'organes de travail, et que ces cadres sont adaptés au véhicule (1) directement ou par des cadres intermédiaires.
